# EUROPEAN PATENT APPLICATION

(11) **EP 2 818 789 A2**
(43) Date of publication of application: **31.12.2014**
(21) Application number: 14020053.6
(22) Date of filing: 17.04.2014
(51) Int. Cl.: F21S 8/10

(54) **Lighting unit for vehicle lamp**

(30) Priority: 17.04.2013 JP 2013086777
(71) Applicant: Stanley Electric Co., Ltd., Meguro-ku Tokyo (JP)
(72) Inventor: Nakaya, Yoshiaki, Tokyo (JP)
(74) Representative: Wimmer, Hubert

(57) **Abstract**

A lighting unit (10) for a vehicle lamp, can include a lens body (14) including an incident surface (14b1), a light exit surface (14b3), and a reflecting surface (14b2) configured to internally reflect light having entered the lens body (14) through the incident surface (14b1), toward the light exit surface (14b3); and a horizontally long light-emitting section (12) disposed at or substantially near a rear focus (F) of the lens body (14) to emit light that enters an inside of the lens body (14) through the incident surface (14b1) and is internally reflected by the reflecting surface (14b2) before exiting through the light exit surface (14b3). The reflecting surface (14b2) has at least two V-grooves (14b2C) formed so as to extend along a plane including an optical axis (AX₁₂) of the horizontally long light-emitting section (12), the V-grooves (14b2C) being disposed adjacent to each other in a circumferential direction of the reflecting surface (14b2). The lighting unit (10) can form horizontally long projected light source images regardless of light exit positions.

## Description

### Technical Field

The present invention relates to lighting units for vehicle lamp, and more particularly relates to a lighting unit for a vehicle lamp, including a horizontally long light-emitting section and a lens body, the lens body including a reflecting surface configured to internally reflect light from the horizontally long light-emitting section to cause the light to exit to the outside.

### Background Art

There have conventionally been proposed lighting apparatuses including a semiconductor light-emitting element and a lens body disposed ahead of the semiconductor light-emitting element (see, for example, c).

FIG. 1 is a perspective view of a lighting apparatus 200 disclosed in Japanese Patent No. 4853252.

As illustrated in FIG. 1, the lighting apparatus 200 disclosed in Japanese Patent No. 4853252 can include a light-emitting element 210 and a lens body 220 disposed ahead of the light-emitting element 210. The lens body 220 can include a central lens portion 222 and a peripheral lens portion 224 disposed therearound so as to surround the central lens portion 222.

The peripheral lens portion 224 can be configured as a lens portion including an incident surface 224a, a front-side surface 224b, and a reflecting surface 224c.

The incident surface 224a can be configured as a cylindrical surface extending from the periphery of the central lens portion 222 toward the light-emitting element 210 so as to surround an optical axis AX in a space ahead of the light-emitting element 210.

The front-side surface 224b can be configured as a plane perpendicular to the optical axis AX.

The reflecting surface 224c can be configured to internally reflect the light, which is emitted by the light-emitting element 210 and enters the inside of the peripheral lens portion 224 through the incident surface 224a, toward the front-side surface 224b. The reflecting surface 224c can be configured as a cylindrical surface surrounding the optical axis AX in an area between an end portion of the incident surface 224a near the light-emitting element 210 and an outer peripheral portion of the front-side surface 224b.

However, when a horizontally long light-emitting section (with an aspect ratio of, for example, 1:4) is used as the light-emitting element 210 in the above-configured lighting apparatus 200, it is impossible to form a light distribution pattern suitable for a horizontally long vehicle lamp which is small in a vertical direction and long in a horizontal direction. When the horizontally long light-emitting section is used as the light-emitting element 210 in the lighting apparatus 200 with the above-described configuration, a projected image of the horizontally long light-emitting section formed by the light reflected by the reflecting surface 224c and exiting from the front-side surface 224b of the lens body 220 becomes an image rotated in accordance with an exit position. As a result, the light distribution pattern formed by the light reflected by the reflecting surface 224c and exiting from the front-side surface 224b of the lens body 220 may have a large vertical width, so that the light distribution pattern suitable for a horizontally long vehicle lamp which is small in the vertical direction and large in the horizontal direction is not obtained.

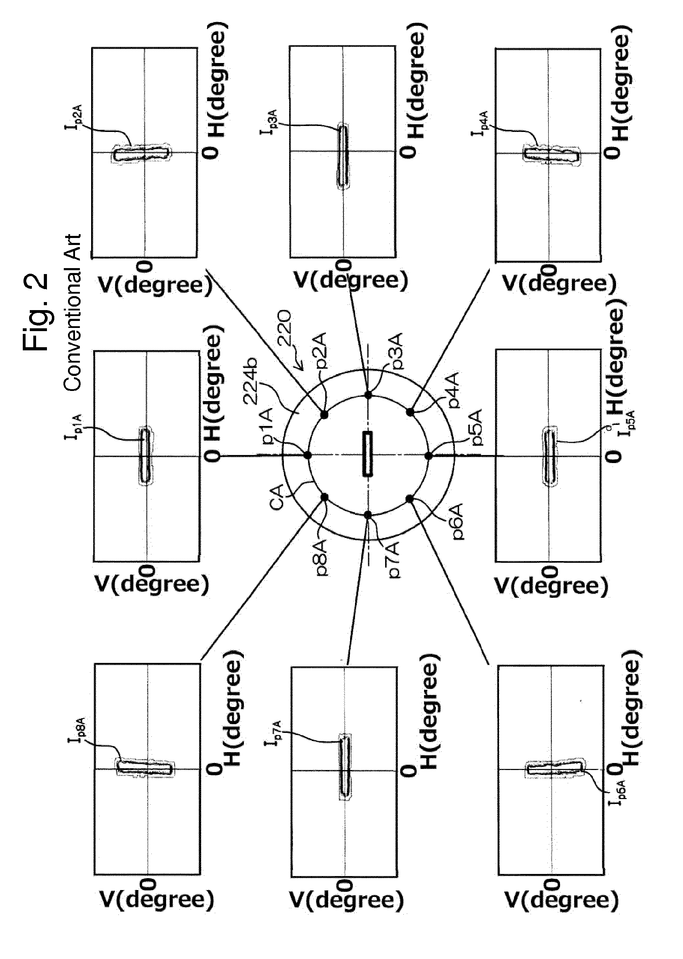

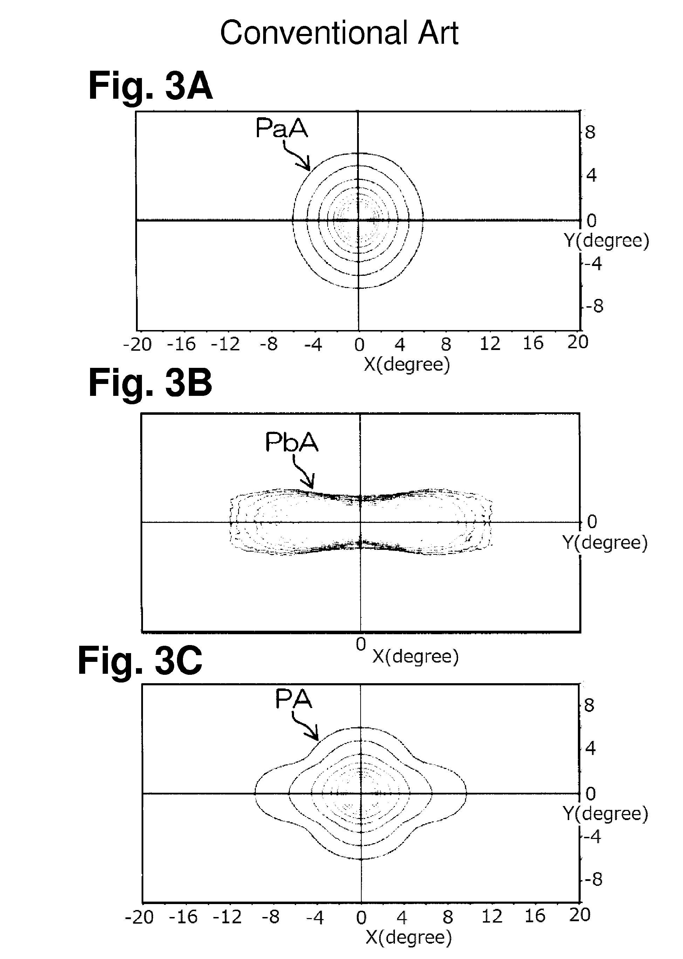

FIG. 2 illustrates simulation results of projected images I_{p1A} to I_{p8A} of the horizontally long light-emitting section formed by the light reflected by the reflecting surface 224c and exiting from respective positions p1A to p8A on a circle CA of the front-side surface 224b of the lens body 220. FIG. 3A illustrates an example of a light distribution pattern PaA formed on a virtual vertical screen by the light coming from the horizontally long light-emitting section, passing through the peripheral lens portion 224, and projected forward. FIG. 3B illustrates an example of a light distribution pattern PbA formed on the virtual vertical screen by the light coming from the horizontally long light-emitting section, passing through the central lens portion 222, and projected forward. FIG. 3C illustrates an example of a combined light distribution pattern PA formed from the light distribution patters PaA and PbA superimposed on each other.

For example, when light exits at the positions of points p1A, p3A, p5A, and p7A on the circle CA as illustrated in FIG. 2, projected images of the horizontally long light-emitting section formed by the light exiting from each of the points p1A, p3A, p5A, and p7A can be horizontally long images (see reference characters I_{p1A}, I_{p3A}, I_{p5A}, and I_{p7A} in FIG. 2). Contrary to this, when light exits at the positions of points p2A, p4A, p6A, and p8A on the circle CA, projected images of the horizontally long light-emitting section formed by the light exiting from each of the points p2A, p4A, p6A, and p8A can be vertically long images (see reference characters I_{p2A}, I_{p4A}, I_{p6A}, and I_{p8A} in FIG. 2).

In the case where light exits from points between the point p1A and the point p2A on the circle CA, a projected image of the horizontally long light-emitting section gradually rotates and shifts from the horizontally long image I_{p1A} to the vertically-long image I_{p2A} as an exit point shifts from the point p1A to the point p2A on the circle CA. This also applies to the case where the exit position is in between the point p2A and the point p8A on the circle CA.

As a result, the light distribution pattern PaA formed by the light, which comes from the horizontally long light-emitting section and is reflected by the reflecting surface 224c so that the light exits from the front-side surface 224b and is projected forward, can have a large vertical width (a circular form) as illustrated in FIG. 3A. Therefore, the resultant light distribution pattern PaA is not suitable for the horizontally long vehicle lamp which is small in the vertical direction and large in the horizontal direction. This problem is particularly notable when a horizontal length of the horizontally long light-emitting section is increased to obtain luminous fluxes.

### Summary

In order to solve these problems, the inventor of the present invention has intensively studied and found the followings. That is, when a horizontally long light-emitting section is used as the light-emitting element in the lighting apparatus with the above-mentioned configuration, the formation of V-grooves on the reflecting surface can generate a horizontally long projected image of the horizontally long light-emitting section irrespective of light exit positions. As a result, the light reflected by the reflecting surface and exiting from the front-side surface of the lens body can form a light distribution pattern suitable for a horizontally long vehicle lamp which is small in the vertical direction and large in the horizontal direction.

The present invention was devised in view of these and other problems and features in association with the conventional art. According to an aspect of the present invention, a lighting unit for use in a vehicle lamp can include a horizontally long light-emitting section and a lens body, the lens body including a reflecting surface configured to internally reflect light from the horizontally long light-emitting section and to cause the light to exit to the outside. In this lighting unit, a projected image of the horizontally long light-emitting section formed by the light reflected by the reflecting surface and exiting from the lens body can be made into a horizontally long image regardless of light exit positions, so that a light distribution pattern suitable for a horizontally long vehicle lamp which is small in the vertical direction and large in the horizontal direction can be formed.

According to another aspect of the present invention, a lighting unit for use in a vehicle lamp can include: a lens body including an incident surface, a light exit surface, and a reflecting surface configured to internally reflect light having entered the lens body through the incident surface, toward the light exit surface; and a horizontally long light-emitting section disposed at or substantially near a rear focus of the lens body to emit light that enters an inside of the lens body through the incident surface and is internally reflected by the reflecting surface before exiting through the light exit surface, wherein the reflecting surface can have at least two V-grooves formed so as to extend along a plane including an optical axis of the horizontally long light-emitting section, the V-grooves being disposed adjacent to each other in a circumferential direction of the reflecting surface.

According to the above aspect of the present invention, it is possible to provide a lighting unit for a vehicle lamp including a horizontally long light-emitting section and a lens body, the lens body including a reflecting surface configured to internally reflect light from the horizontally long light-emitting section and to cause the light to exit to the outside, in which a projected image of the horizontally long light-emitting section formed by the light reflected by the reflecting surface and exiting from the lens body can be made into a horizontally long image regardless of light exit positions. As a result, a light distribution pattern suitable for a horizontally long vehicle lamp which is small in the vertical direction and large in the horizontal direction can be formed. This is because the reflecting surface can have at least two V-grooves formed so as to extend along a plane including an optical axis of the horizontally long light-emitting section and be disposed adjacent to each other in the circumferential direction of the reflecting surface.

In the lighting unit for a vehicle lamp according to the above aspect, the incident surface can be configured as a cylindrical surface surrounding the optical axis in a space ahead of the horizontally long light-emitting section, and the reflecting surface can be configured as a cylindrical surface surrounding the optical axis in an area between an end portion of the incident surface near the horizontally long light-emitting section and an outer peripheral portion of the light exit surface.

According to the above aspect of the present invention, it is possible to provide the lighting unit for a vehicle lamp capable of taking a larger part of the light from the horizontally long light-emitting section into the lens body. This is because the incident surface can be configured as a cylindrical surface surrounding the optical axis of the horizontally long light-emitting section in a space ahead of the horizontally long light-emitting section.

In the lighting unit for a vehicle lamp according to the above aspect, the lens body is configured to include a central lens portion disposed on the optical axis and a peripheral lens portion disposed in an outer circumference of the central lens portion so as to surrounded the central lens portion, and the peripheral lens portion is configured to include the incident surface, the light exit surface, and the reflecting surface.

According to the above aspect of the present invention, it is possible to form a combined light distribution pattern formed by superimposing a light distribution pattern formed by the light exiting from the central lens portion and a light distribution pattern formed by the light exiting from the peripheral lens portion.

In the lighting unit for a vehicle lamp according to the above aspect, the horizontally long light-emitting section can have an aspect ratio of 1:2 or more.

According to the above aspect of the present invention, it is possible to provide the lighting unit for a vehicle lamp including a horizontally long light-emitting section having an aspect ratio of 1:2 or more and a lens body, the lens body including a reflecting surface configured to internally reflect light from the horizontally long light-emitting section and to allow the light to exit to the outside. With this configuration, a projected image of the horizontally long light-emitting section formed by the light reflected by the reflecting surface and exiting from the lens body can be made into a horizontally long image regardless of light exit positions, so that a light distribution pattern suitable for a horizontally long vehicle lamp which is small in the vertical direction and large in the horizontal direction can be formed. This is because the reflecting surface can have at least two V-grooves formed so as to extend along the plane including the optical axis of the horizontally long light-emitting section and be disposed adjacent to each other in the circumferential direction of the reflecting surface.

According to the various aspects of the present invention, it becomes possible to provide the lighting unit for a vehicle lamp including a horizontally long light-emitting section and a lens body, the lens body including a reflecting surface configured to internally reflect light from the horizontally long light-emitting section and to allow the light to exit to the outside. With the lighting unit for a vehicle lamp having the above configuration, a projected image of the horizontally long light-emitting section formed by the light reflected by the reflecting surface and exiting from the lens body can be made into a horizontally long image regardless of light exit positions, so that a light distribution pattern suitable for a horizontally long vehicle lamp which is small in the vertical direction and large in the horizontal direction can be formed.

### Brief Description of Drawings

These and other characteristics, features, and advantages of the present invention will become clear from the following description with reference to the accompanying drawings, wherein:

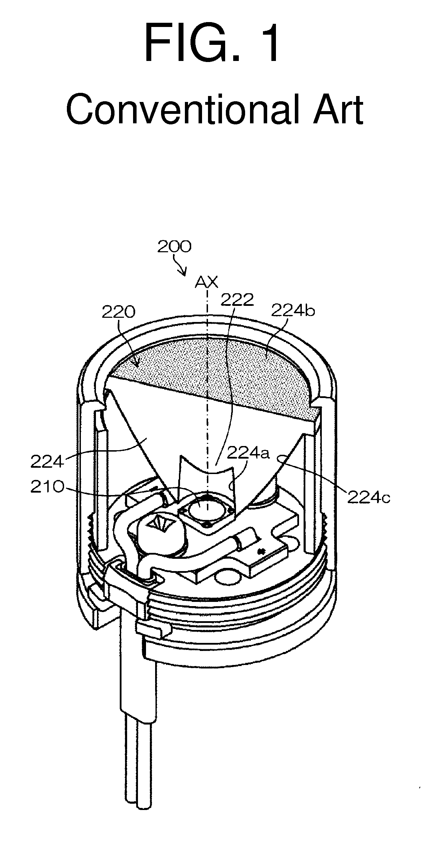

FIG. 1 is a perspective view of the lighting apparatus 200 disclosed in Japanese Patent No. 4853252;
FIG. 2 illustrates simulation results of projected images I_{p1A} to I_{p8A} of the horizontally long light-emitting section formed by the light reflected by the reflecting surface 224c and exiting from respective positions p1A to p8A on the circle CA of the front-side surface 224b of the lens body 220;
FIG. 3A illustrates an example of a light distribution pattern PaA formed on a virtual vertical screen by the light coming from the horizontally long light-emitting section, passing through the peripheral lens portion 224, and projected forward, FIG. 3B illustrates an example of a light distribution pattern PbA formed on the virtual vertical screen by the light coming from the horizontally long light-emitting section, passing through the central lens portion 222, and projected forward, and FIG. 3C illustrates an example of a combined light distribution pattern PA formed from the light distribution patters PaA and PbA superimposed on each other;
FIG. 4 is a perspective view of a lighting unit for a vehicle lamp 10 made in accordance with principles of the present invention;
FIGS. 5A, 5B, and 5C are a top view, a front view, and a cross sectional view of a lens body 14 of the lighting unit, respectively;
FIG. 6 illustrates optical paths of the light coming from a light-emitting element 12 and passing through a central lens portion 14a and a peripheral lens portion 14b of the lens body 14;
FIG. 7 is a cross sectional view of the lens body 14 illustrated in FIG. 5A taken along line A-A;
FIG. 8 illustrates simulation results of projected images of the light-emitting element 12 (horizontally long light-emitting section) formed by the light reflected by a reflecting surface 14b2 and exiting from respective positions p1 to p8 on a circle C of a front-side surface of the lens body 14;

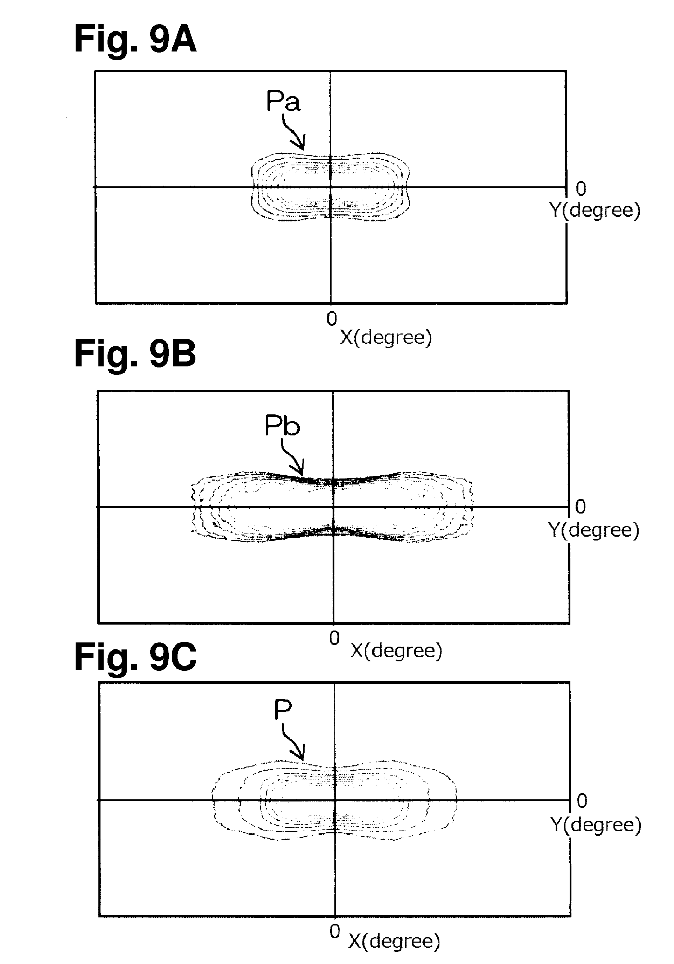

FIG. 9A illustrates an example of a light distribution pattern Pa formed on the virtual vertical screen by the light coming from the light-emitting element 12, passing through the peripheral lens portion 14b, and projected forward, FIG. 9B illustrates an example of a light distribution pattern Pb formed on the virtual vertical screen by the light coming from the light-emitting element 12, passing through the central lens portion 14a, and projected forward, and FIG. 9C illustrates an example of a combined light distribution pattern P formed from the light distribution patters Pa and Pb superimposed on each other;
FIG. 10A is a perspective view illustrating the light reflected twice by the V-grooves 14b2C, and FIG. 10B is an enlarged perspective view illustrating a circled portion illustrated in FIG. 10A;
FIGS. 11A, 11B, 11C, and 11D are respectively a top view, a front view, a cross sectional view, and a rear view of a lens body 14 including V-grooves 14b2C as a modified example made in accordance with the principles of the present invention;
FIG. 12 is a cross sectional view of a lens body 14 (first modified example);
FIG. 13 is a cross sectional view of a lens body 14 (second modified example); and

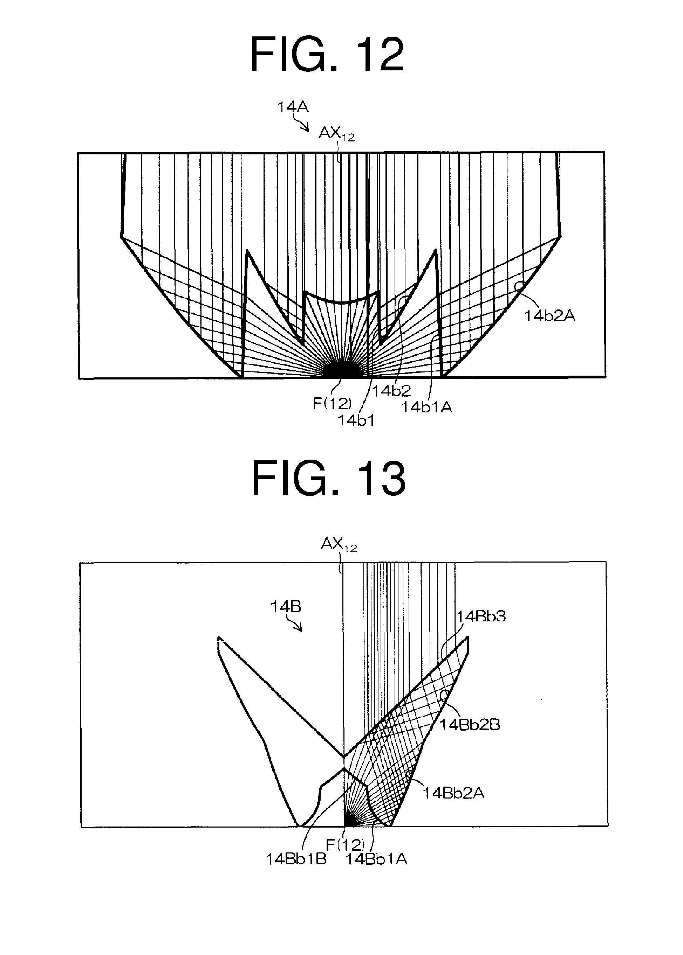

FIG. 12 is a cross sectional view of a lens body 14 (third modified example).

### Description of Exemplary Embodiments

A description will now be made below to lighting units for a vehicle lamp of the present invention with reference to the accompanying drawings in accordance with exemplary embodiments.

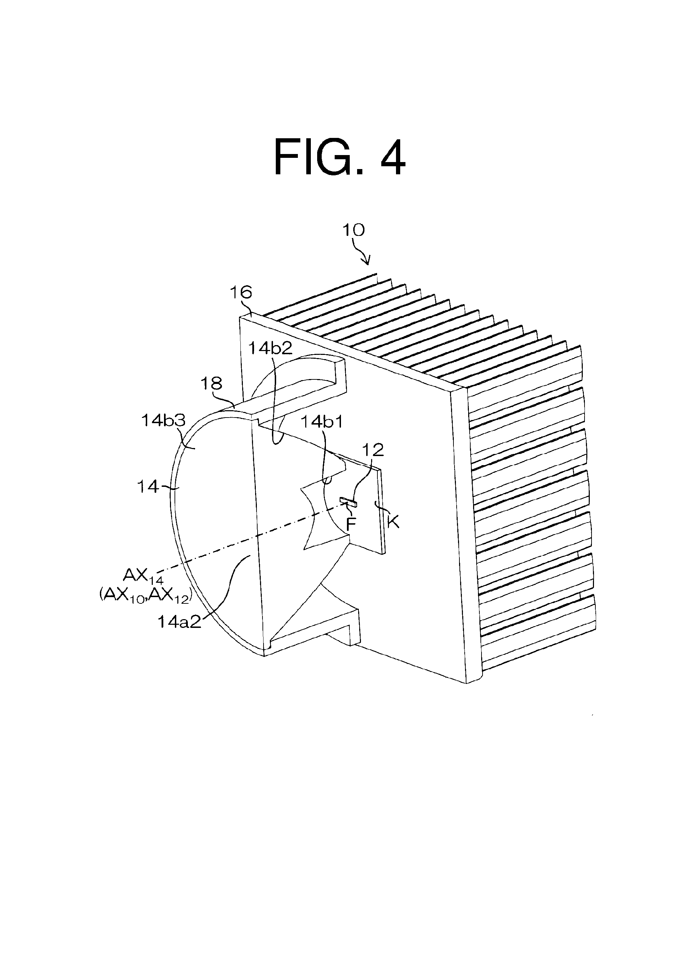

FIG. 4 is a perspective view of a lighting unit for a vehicle lamp 10 according to the present exemplary embodiment.

As illustrated in FIG. 4, the lighting unit 10 according to the present exemplary embodiment can be so-called a direct projection type (also referred to as a direct radiation type) lighting unit. The lighting unit 10 can include a light-emitting element 12 (corresponding to the horizontally long light-emitting section in the present invention), a lens body 14, and a retaining member 16, including such as a heat sink. The retaining member can retain these components.

The light-emitting element 12 can be a light source disposed at or substantially near a rear focus F of the lens body 14. The light-emitting element 12 can emit light which enters the inside of the lens body 14 through an incident surface 14b1, where the light is internally reflected by a reflecting surface 14b2 and exits from a front-side surface 14b3. More specifically, the light-emitting element 12 can be a semiconductor light-emitting element such as a light-emitting diode (LED) and a laser diode (LD). In the present exemplary embodiment, for example, the light-emitting element 12 can be a semiconductor light emitting element composed of 4 LEDs each including a light-emitting surface of 1 mm square. The light-emitting element 12 can be mounted so that the LEDs are aligned in a horizontal direction at prescribed intervals on the surface of a substrate K which is fixed to the retaining member 16. The light-emitting element 12 can be configured to have a horizontally long light-emitting section having an aspect ratio of 1:4. The aspect ratio of the horizontally long light-emitting section is not limited to 1:4, but may be 1:2 or more. The light-emitting element 12 can be disposed at or substantially near the rear focus F of the lens body 14 with the light-emitting surface facing forward.

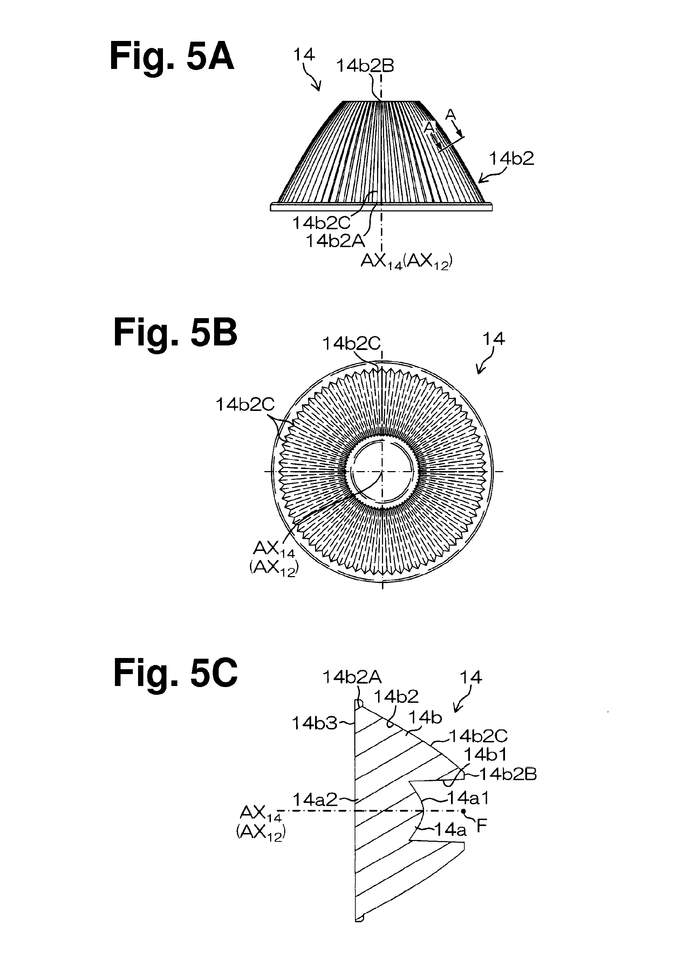

FIGS. 5A, 5B, and 5C are a top view, a front view, and a cross sectional view of the lens body 14 of the lighting unit 10, respectively.

The lens body 14 can be held by a lens holder 18 fixed to the retaining member 16, and disposed on an optical axis AX₁₀ of the lighting unit 10 extending in a front-to-rear direction of a vehicle. In the present exemplary embodiment, the optical axis AX₁₀ of the lighting unit 10, an optical axis AX₁₄ of the lens body 14, and an optical axis AX₁₂ of the light-emitting element 12 (horizontally long light-emitting section) can be configured to be substantially aligned.

The lens body 14 can be made of a transparent resin, such as acrylics. As illustrated in FIGS. 4 and 5A to 5C, the lens body 14 can include a central lens portion 14a disposed on the optical axis AX₁₀ and a peripheral lens portion 14b. The peripheral lens portion 14b can be disposed in the outer circumference of the central lens portion 14a so as to surround the central lens portion 14a. The lens body 14 can be configured as a lens body rotationally symmetrical about the optical axis AX₁₄ as a rotating axis.

As illustrated in FIGS. 4 and 5C, the front-side surface of the lens body 14 can be configured as a flat surface perpendicular to the optical axis AX₁₄. The front-side surface of the lens body 14 can be configured to include a front-side surface 14a2 of the central lens portion 14a, and a front-side surface 14b3 of the peripheral lens portion 14b. The front-side surface 14b3 of the peripheral lens portion 14b can be disposed so as to surround the front-side surface 14a2 in the outer circumference of the front-side surface 14a2 of the central lens portion 14a.

The central lens portion 14a can be configured as a lens portion including a rear-side surface 14a1, the front-side surface 14a2, and the rear focus F.

The rear-side surface 14a1 can be configured as a convex lens surface protruding toward the light-emitting element 12. The front-side surface 14a2 can be configured as a flat surface perpendicular to the optical axis AX₁₄.

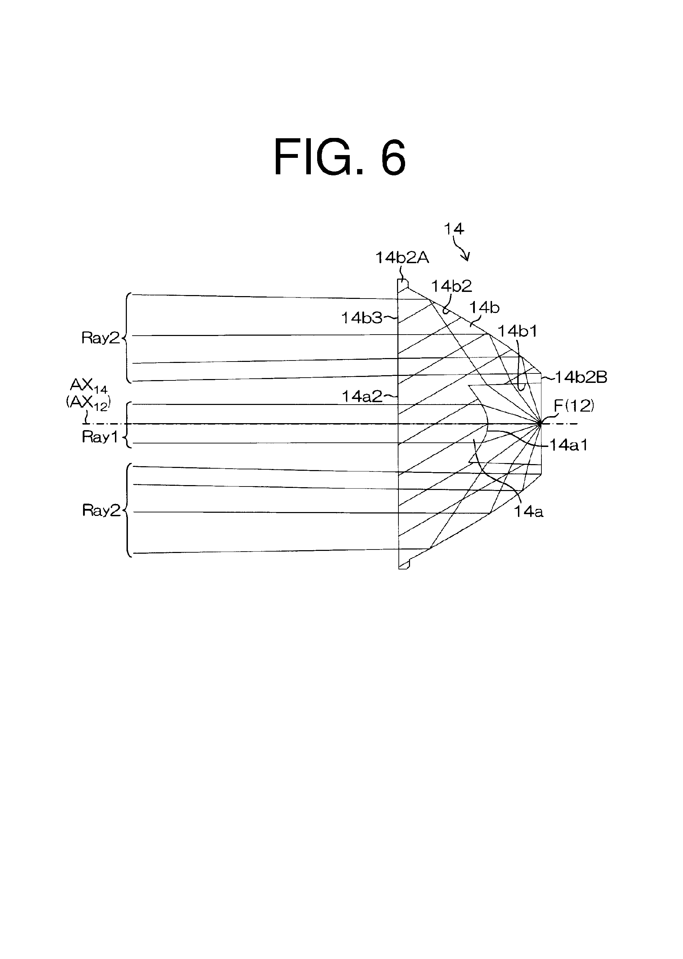

FIG. 6 illustrates optical paths of the light coming from the light-emitting element 12 and passing through the central lens portion 14a and the peripheral lens portion 14b of the lens body 14.

As illustrated in FIG. 6, the rear-side surface 14a1 can have such a surface configuration that light Ray 1 from the light-emitting element 12 can enter the inside of the central lens portion 14a through the rear-side surface 14a1, and exit from the front-side surface 14a2 as the light parallel to the optical axis AX₁₄. More specifically, the rear-side surface 14a1 can have such a surface configuration that the light Ray 1 from the rear focus F (a virtual point light source) can enter the inside of the central lens portion 14a through the rear-side surface 14a1 and exit from the front-side surface 14a2 as the light parallel to the optical axis AX₁₄.

The peripheral lens portion 14b can be configured as a lens portion including the incident surface 14b1, the front-side surface 14b3, and a reflecting surface 14b2.

The incident surface 14b1 can be configured as a cylindrical surface extending from the periphery of the central lens portion 14a toward the light-emitting element 12 to surround the optical axis AX₁₂ in a space ahead of the light-emitting element 12.

The front-side surface 14b3 can be configured as a flat surface perpendicular to the optical axis AX₁₄.

The reflecting surface 14b2 can be configured to internally reflect the light, which comes from the light-emitting element 12 and enters the inside of the peripheral lens portion 14b through the incident surface 14b1, toward the front-side surface 14b3. The reflecting surface 14b2 can be configured as a cylindrical surface surrounding the optical axis AX₁₂ in an area between an end portion of the incident surface 14b1 near the light-emitting element 12 and an outer peripheral portion of the front-side surface 14b3.

As illustrated in FIG. 6, the reflecting surface 14b2 can have such a basic surface configuration that light Ray 2 from the light-emitting element 12 can enter the inside of the peripheral lens portion 14b through the incident surface 14b1, where the light can be reflected by the reflecting surface 14b2 and exit from the front-side surface 14b3 as the light parallel to the optical axis AX₁₄. More specifically, the reflecting surface 14b2 can have such a basic surface configuration that the light Ray 2 from the rear focus F (a virtual point light source) can enter the inside of the peripheral lens portion 14b through the incident surface 14b1, where the light can be reflected by the reflecting surface 14b2 and exit from the front-side surface 14b3 as the light parallel to the optical axis AX₁₄.

As illustrated in FIGS. 5A and 5B, the reflecting surface 14b2 can include a plurality of V-grooves 14b2C extending along a plane including the optical axis AX₁₂, the V-grooves 14b2C being adjacent to each other in the circumferential direction of the reflecting surface.

The respective V-grooves 14b2C can be formed so as to extend from the end portion of the incident surface 14b1 near the light-emitting element 12 to the outer peripheral portion of the front-side surface 14b3 (see FIG. 5A). The respective V-grooves 14b2C can be formed on the entire circumferential area of the reflecting surface 14b2 so as to be adjacent to each other (see FIG. 5C). In the present exemplary embodiment, a total of 72 V-grooves 14b2C are formed so as to be adjacent to each other at intervals of 5 degrees (pitches).

As illustrated in FIG. 5A, each of the V-grooves 14b2C can be configured so that its sectional shape (V shape) becomes gradually smaller from the front end portion 14b2A toward the rear-end portion 14b2B of each of the V-grooves 14b2C (for example, with a ratio of front end portion: rear end portion =2:1).

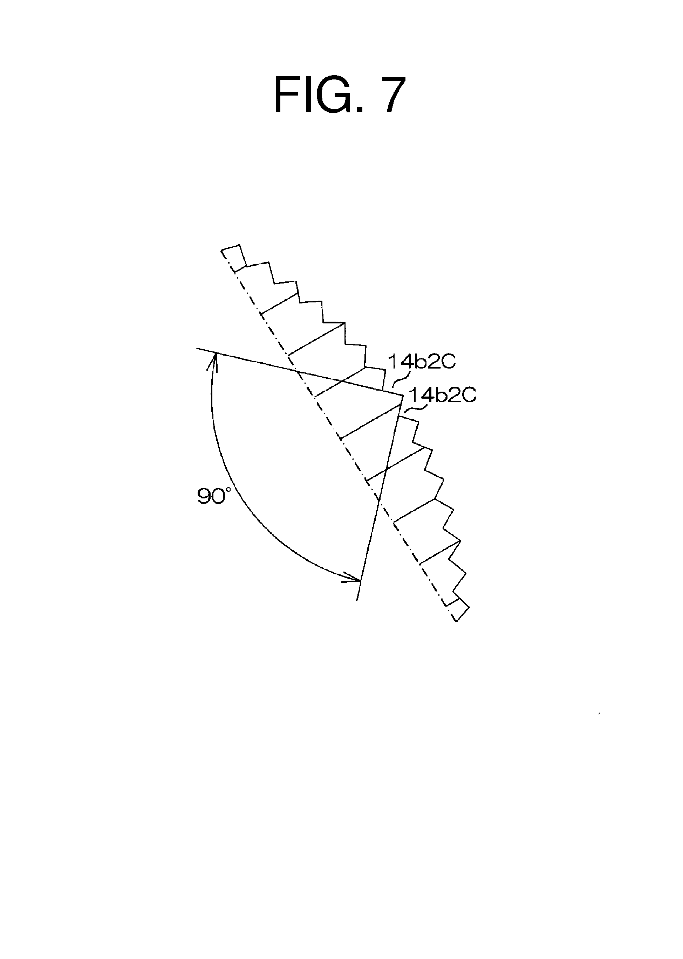

FIG. 7 is a cross sectional view of the lens body 14 illustrated in FIG. 5A taken along line A-A.

As illustrated in FIG. 7, an angle formed between adjacent surfaces constituting a V-groove 14b2C and another V-groove 14b2C can be 90 degrees. These two surfaces which constitute the respective V-grooves can each be formed as a flat surface.

The inventor of the present invention examined projected images of the light-emitting element 12 (horizontally long light-emitting section) formed by the light reflected by the reflecting surface 14b2 and exiting from the front-side surface of the above-configured lens body 14. As a result, the inventor has confirmed that the projected images of the light-emitting element 12 become horizontally long images irrespective of light exit positions, and therefore the light reflected by the reflecting surface 14b2 and exiting from the front-side surface of the lens body 14 can form light distribution patterns suitable for a horizontally long vehicle lamp which is small in the vertical direction and large in the horizontal direction.

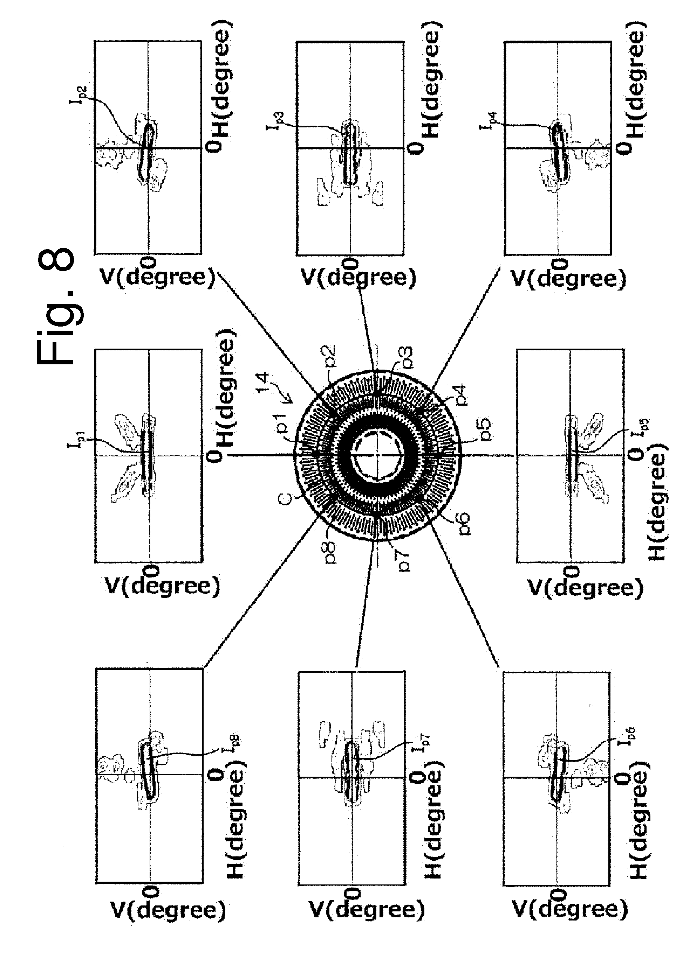

FIG. 8 illustrates simulation results of projected images of the light-emitting element 12 (horizontally long light-emitting section) formed by the light reflected by the reflecting surface 14b2 and exiting from respective positions p1 to p8 on the circle C of the front-side surface of the lens body 14. FIG. 9A illustrates an example of a light distribution pattern Pa formed on the virtual vertical screen by the light coming from the light-emitting element 12 passing through the peripheral lens portion 14b, and projected forward. FIG. 9B illustrates an example of a light distribution pattern Pb formed on the virtual vertical screen by the light coming from the light-emitting element 12, passing through the peripheral lens portion 14b, and projected forward. FIG. 9C illustrates an example of a combined light distribution pattern P formed from the light distribution patters Pa and Pb superimposed on each other.

As is clear from FIG. 8, when the light exits from any one of the respective points p1 to p8 on the circle C, a projected image of the light-emitting element 12 (horizontally long light-emitting section) formed by the right exiting from each of the points p1 to p8 can be a horizontally long image (see reference characters Iₚ₁ to Iₚ₈ in FIG. 8). The inventor of the present invention confirmed that the same result was obtained in both the cases where the light exit position was between the point p1 and the point p2 on the circle C and between the point p2 and the point p8 on the circle C.

As described in the foregoing, a projected image of the light-emitting element 12 becomes a horizontally long image irrespective of the light exit positions. As a result, light distribution patterns formed by the light which is emitted from the light-emitting element 12, reflected by the reflecting surface 14b2, and exits from the front-side surface 14a3 can be made into the light distribution pattern Pa suitable for a horizontally long vehicle lamp which is small in the vertical direction and large in the horizontal direction as illustrated in FIG. 9A.

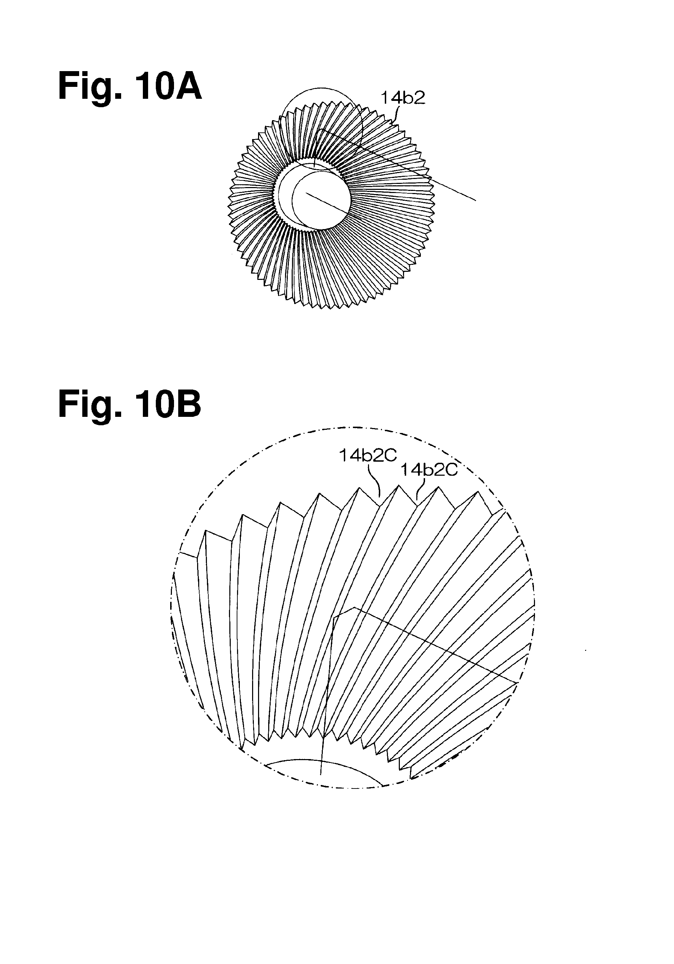

It is presumed that the projected images of the light-emitting element 12 (horizontally long light-emitting portion) become horizontally long images irrespective of the light exit positions as described in the foregoing because of the following reason. That is, the light coming from the light-emitting element 12 and entering the reflecting surface 14b2 can be reflected twice by the V-grooves 14b2C, so that the image of the light-emitting element 12 (horizontally long light-emitting section) can change from an erect image to an inverted image, and from the inverted image to an erect image as illustrated in FIGS. 10A and 10B. FIG. 10A is a perspective view illustrating the light reflected twice by the V-grooves 14b2C, and FIG. 10B is an enlarged perspective view illustrating a circled portion illustrated in FIG. 10A.

A contours of the projected image of the light-emitting element 12 (horizontally long light-emitting section) can be blurred with the V-grooves 14b2C being formed at larger intervals (pitches), whereas the contour can be sharpened at smaller intervals (pitches). Therefore, light distribution feeling can be improved by, for example, making the intervals (pitches) of the V-grooves 14b2C a bit larger. When a projected image needs a sharp end portion, as in the case of forming a light distribution pattern including a cutoff portion such as in the case of a low beam and a fog lamp, the V-grooves 14b2C may be formed at smaller intervals (pitches).

An angle formed between adjacent surfaces each constituting one V-groove 14b2C and another V-groove 14b2C is preferably 90 degrees. These two surfaces which constitute the respective V-grooves are each preferably formed as a flat surface. This enables the light coming from the light-emitting element 12 and being incident on each V-groove 14b2C to be reflected twice with more reliability.

In the above-configured lighting unit 10 for a vehicle lamp, the light emitted from the light-emitting element 12 and entering the inside of the central lens portion 14a through the rear-side surface 14a1 of the central lens portion 14a can exit from the front-side surface 14a2 to form a light distribution pattern Pb as illustrated in FIG. 9B on a virtual vertical screen.

On the other hand, the light emitted from the light-emitting element 12 and entering the inside of the peripheral lens portion 14b through the incident surface 14b1 of the peripheral lens portion 14b can be reflected by the reflecting surface 14b2 and exit from the front-side surface 14b3 to form a light distribution pattern Pa as illustrated in FIG. 9B on the virtual vertical screen.

The respective light distribution patterns Pa and Pb can be superimposed to form a combined light distribution pattern P as illustrated in FIG. 9C. The combined light distribution pattern P can be a light distribution pattern (such as a light distribution pattern for a high beam) suitable for a horizontally long vehicle lamp which is small in the vertical direction and large in the horizontal direction.

As described in the foregoing, according to the lighting unit for a vehicle lamp 10 of the present exemplary embodiment, it is possible to provide the vehicle lamp unit 10 including the light-emitting element 12 (such as a horizontally long light-emitting section with an aspect ratio of 1:2 or more) and the lens body 14, the lens body 14 including the reflecting surface 14b2 configured to internally reflect the light from the light-emitting element 12 and to allow the reflected light exit to the outside. With the lighting unit for a vehicle lamp 10 having the above configuration, a projected image of the light-emitting element 12 (horizontally long light-emitting section) formed by the light reflected by the reflecting surface and exiting from the lens body 14 can be made into a horizontally long image (for example, Iₚ₁ to Iₚ₈) regardless of light exit positions, so that a light distribution pattern suitable for a horizontally long vehicle lamp which is small in the vertical direction and large in the horizontal direction can be formed. This is because the reflecting surface 14b2 can have at least two V-grooves 14b2C formed so as to extend along a plane including an optical axis AX₁₂ of the light-emitting element 12 (horizontally long light-emitting section), the V-grooves 14b2C being disposed adjacent to each other in the circumferential direction of the reflecting surface.

According to the present exemplary embodiment, it is possible to provide the lighting unit for a vehicle lamp 10 capable of taking a larger part of the light from the light-emitting element 12 (horizontally long light-emitting section) into the lens body 14. This is because the incident surface 14b1 can be configured as a cylindrical surface surrounding the optical axis Ax₁₂ of the light-emitting element 12 (horizontally long light-emitting section) in a space ahead of the light-emitting element 12 (horizontally long light-emitting section).

In the lighting unit for a vehicle lamp 10 of the present exemplary embodiment, the number of times of reflection is larger by one time than that in the case of constituting the reflecting surface 14b2 as a single curved surface. However, since reflection by the reflecting surface 14b2 is internal reflection, efficiency deterioration does not occur (or efficiency deterioration is in a negligible level).

According to the lighting unit for a vehicle lamp 10 of the present exemplary embodiment, the contour of the projected image can properly be blurred, so that a uniform irradiation pattern with less luminance unevenness or color unevenness can be formed as a secondary effect. Therefore, the formed pattern is particularly adequate as a high beam light distribution pattern.

A description will now be given of a modified example of the V-groove 14b2C.

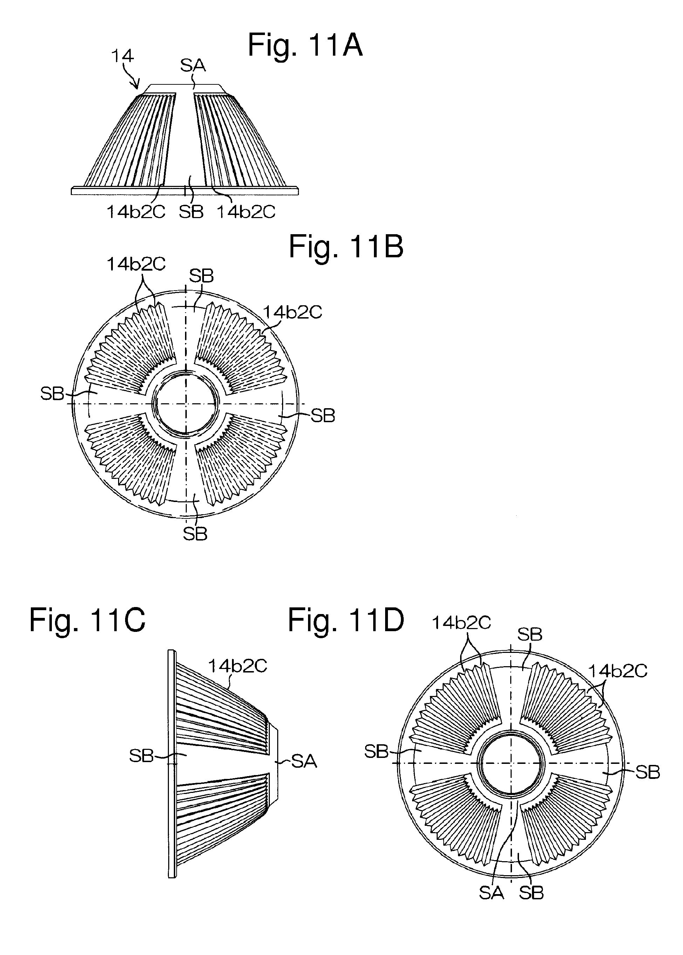

FIGS. 11A, 11B, 11C, and 11D are respectively a top view, a front view, a cross sectional view, and a rear view of a lens body 14 including V-grooves 14b2C as a modified example made in accordance with the principles of the present invention.

In the above exemplary embodiment, an example in which the respective V-grooves 14b2C are formed so as to extend from the end portion of the incident surface 14b1 near the light-emitting element 12 to the outer peripheral portion of the front-side surface 14b3 has been described. However, the present invention is not limited to this example.

For example, the respective V-grooves 14b2C may be formed at least in part of the area between the end portion of the incident surface 14b1 near the light-emitting element 12 and the outer peripheral portion of the front-side surface 14b3. For example, as illustrated in FIGS. 11A to 11D, the V-grooves 14b2C may be omitted in an end portion SA of the incident surface 14b1 near the light-emitting element 12, which is an area causing the projected image of the light-emitting element 12 (horizontally long light-emitting section) that is formed by exit light to be relatively small.

In the above exemplary embodiment, an example in which the respective V-grooves 14b2C are formed in the entire circumferential area of the reflecting surface 14b2 has been described. However, the present invention is not limited to this example.

For example, the respective V-grooves 14b2C may be formed at least in part of the circumferential area of the respective reflecting surfaces 14b2. For example, as illustrated in FIGS. 11A to 11D, the V-grooves 14b2 may be omitted in partial regions SB positioned in four directions, which are areas causing the projected image of the light-emitting element 12 (horizontally long light-emitting section) that is formed by exit light to be substantially horizontally long.

Although an example in which a total of 72 V-grooves 14b2C are formed at intervals of 5 degrees has been described in the above exemplary embodiment, the present invention is not limited to this example. More specifically, at least two V-groove 14b2C may be formed adjacent to each other in the circumferential direction of the reflecting surface. If at least two V-grooves 14b2C are formed adjacent to each other in the circumferential direction of the reflecting surface, the light coming from the light-emitting element 12 and entering the reflecting surface 14b2 can be reflected twice by the V-grooves 14b2C, so that an image of the light-emitting element 12 (horizontally long light-emitting section) can change from an erect image to an inverted image, and from the inverted image to an erect image as illustrated in FIGS. 10A and 10B. As a result, the projected image of the light-emitting element 12 can be formed as a horizontally long image irrespective of light exit positions.

A description will now be given of a first modified example of the lens body 14.

FIG. 12 is a cross sectional view of a lens body 14A according to the first modified example.

In the above exemplary embodiment, an example in which the lens body 14 is configured as a lens body including one incident surface 14b1 and one reflecting surface 14b2 has been described. However, the present invention is not limited to this example.

For example, as illustrated in FIG. 12, the lens body 14 may be configured as the lens body 14A including not only one incident surface 14b1 and one reflecting surface 14b2, but also a similar incident surface 14b1A and a similar reflecting surface 14b2A which are disposed on the outer side of the incident surface 14b1 and the reflecting surface 14b2. A combination of the similar incident surface and reflecting surface may further be added.

Also in the present modified example, the same effects as the above exemplary embodiment may be obtained by forming the above-configured V-grooves 14b2C at least in part of the respective reflecting surfaces 14b2 and 14b2A.

A description will now be given of a second modified example of the lens body 14.

FIG. 13 is a cross sectional view of a lens body 14B according to the second modified example.

In the above exemplary embodiment, an example in which the lens body 14 is configured as a lens body including the central lens portion 14a. However, the present invention is not limited to this example.

For example, as illustrated in FIG. 13, the lens body 14 may be configured as a lens body 14B which does not include the central lens portion 14a.

The lens body 14B in this modified example can be configured as a lens body including a first incident surface 14Bb1A, a second incident surface 14Bb1B, a front-side surface 14Bb3, a first reflecting surface 14Bb2A, and a second reflecting surface 14Bb2B.

The first incident surface 14Bb1A and the second incident surface 14Bb1B can be configured as a cylindrical surface surrounding the optical axis AX₁₂ in a space ahead of the light-emitting element 12.

The front-side surface 14Bb3 can be configured as a cone-shaped surface having a vertex near the light-emitting element 12.

The first reflecting surface 14Bb2A can be a reflecting surface configured to internally reflect the light coming from the light-emitting element 12 and entering the inside of lens body 14B through the first incident surface 14Bb1A, toward the front-side surface 14b3. The first reflecting surface 14Bb2A can be configured as a cylindrical surface surrounding the optical axis AX₁₂.

The first reflecting surface 14Bb2A can have such a basic surface configuration that the light from the light-emitting element 12 enters the inside of the lens body 14B through the first incident surface 14Bb1A, where the light can be reflected by the first reflecting surface 14Bb2A and exit through the front-side surface 14Bb3 as the light parallel to the optical axis AX₁₄. More specifically, the first reflecting surface 14Bb2A can have such a basic surface configuration that the light from the rear focus F (virtual point light source) enters the inside of the lens body 14B through the first incident surface 14Bb1A, where the light can be reflected by the first reflecting surface 14Bb2A and exit from the front-side surface 14Bb3 as the light parallel to the optical axis AX₁₄.

The second reflecting surface 14Bb2B can be a reflecting surface configured to internally reflect the light coming from the light-emitting element 12 and entering the inside of lens body 14B through the second incident surface 14Bb1B, toward the front-side surface 14b3. The second reflecting surface 14Bb2B can be configured as a cylindrical surface surrounding the optical axis AX₁₂.

The second reflecting surface 14Bb2B can have such a basic surface configuration that the light from the light-emitting element 12 enters the inside of the lens body 14B through the second incident surface 14Bb1B, where the light can be reflected by the front-side surface 14Bb3 and then the second reflecting surface 14Bb2B and exit from the front-side surface 14Bb3 as the light parallel to the optical axis AX₁₄. More specifically, the second reflecting surface 14Bb2B can have such a basic surface configuration that the light from the rear focus F (virtual point light source) enters the inside of the lens body 14B through the second incident surface 14Bb1B, where the light can be reflected by the front-side surface 14Bb3 and then the second reflecting surface 14Bb2B and exit from the front-side surface 14Bb3 as the light parallel to the optical axis AX₁₄.

Also in the present modified example, the same effects as the above exemplary embodiment may be obtained by forming the above-configured V-grooves 14b2C at least in part of the respective reflecting surfaces 14Bb2A and 14Bb2B.

A description will now be given of a third modified example of the lens body 14.

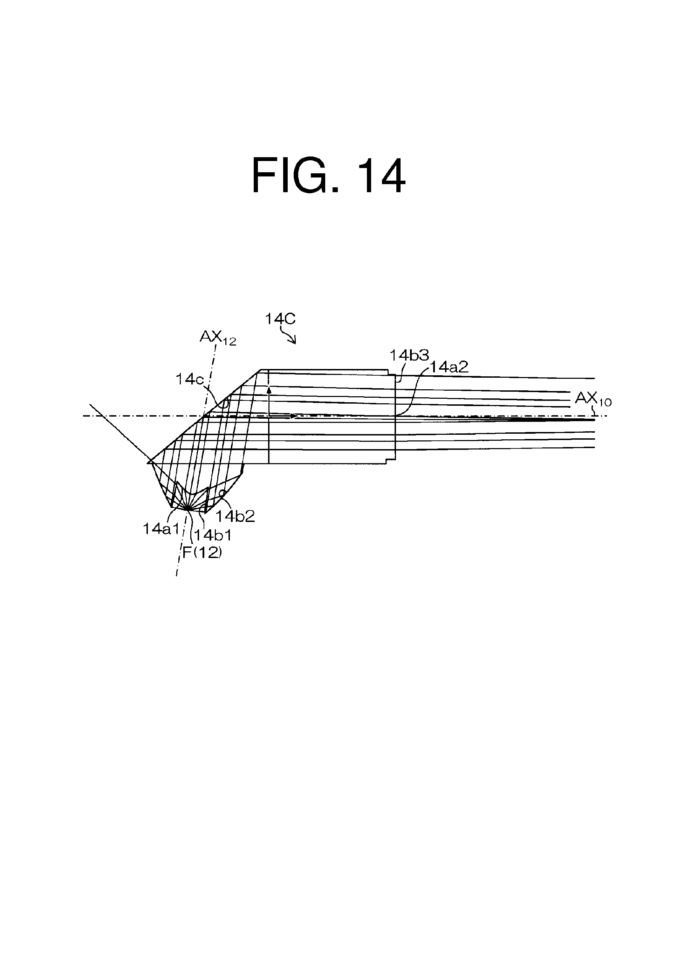

FIG. 14 is a cross sectional view of a lens body 14C according to the third modified example.

As illustrated in FIG. 14, the present modified example is different from the above-described exemplary embodiment mainly in the following points. The first different point is that the light-emitting element 12, the rear-side surface 14a1 of the central lens portion 14a, the incident surface 14b1 of the peripheral lens portion 14b, and the reflecting surface 14b2 can be disposed at positions distant from the optical axis AX₁₀ of the lighting unit for a vehicle lamp 10. The second different point is that the optical axis AX₁₂ of the light-emitting element 12 (horizontally long light-emitting section) can be inclined with respect to the optical axis AX₁₀ of the lighting unit 10. The third different point is that the lens body 14C can include a flat mirror 14c (plane reflecting surface) disposed between the reflecting surface 14b2 and the front-side surface 14b3, the flat mirror 14c being configured to internally reflect the light coming from the light-emitting element 12 and reflected by the reflecting surface 14b2, toward the front-side surface 14b3.

Also in the present modification, the same effects as the above exemplary embodiment may be obtained by forming the above-configured V-grooves 14b2C at least in part of the reflecting surface 14b2.

A description will now be given of a modified example of the front-side surface.

In the exemplary embodiment described above, an example in which the front-side surface of the lens body 14 is configured as a flat surface perpendicular to the optical axis AX₁₄ has been described. However, the present invention is not limited to this example.

For example, at least one lens cut part may be formed on the front-side surface (at least part of the front-side surface 14a2 of the central lens portion 14a and/or the front-side surface 14b3 of the peripheral lens portion 14b) of the lens body 14. In this case, the shape of the lens cut part can be adjusted so that the light, which comes from the light-emitting element 12 and exits from the front-side surface of the lens body 14, can be directed in a desired direction. This makes it possible to form a light distribution pattern suitable for a vehicle lamp, such as a light distribution pattern for a low beam and a light distribution pattern for a fog lamp other than the light distribution pattern for a high beam.

## Claims

1. A lighting unit (10) for a vehicle lamp, comprising:
a lens body (14) including an incident surface (14b1), a light exit surface (14b3), and a reflecting surface (14b2) configured to internally reflect light having entered the lens body (14) through the incident surface (14b1), toward the light exit surface (14b3), the lens body (14) having a rear focus (F); and
a horizontally long light-emitting section (12) having an optical axis (AX₁₂) and disposed at or substantially near the rear focus (F) of the lens body (14) to emit light that enters an inside of the lens body (14) through the incident surface (14b1) and is internally reflected by the reflecting surface (14b2) before exiting through the light exit surface (14b3), the lighting unit for a vehicle lamp **characterized in that**
the reflecting surface (14b2) has at least two V-grooves (14b2C) formed so as to extend along a plane including the optical axis (AX₁₂) of the horizontally long light-emitting section (12), the V-grooves (14b2C) being disposed adjacent to each other in a circumferential direction of the reflecting surface (14b2).

2. The lighting unit (10) according to claim 1, **characterized in that**
the incident surface (14b1) is configured as a cylindrical surface surrounding the optical axis (AX₁₂) in a space ahead of the horizontally long light-emitting section (12), and
the reflecting surface (14b2) is configured as a cylindrical surface surrounding the optical axis (AX₁₂) in an area between an end portion of the incident surface (14b1) near the horizontally long light-emitting section (12) and an outer peripheral portion of the light exit surface (14b3).

3. The lighting unit (10) according to claim 1 or 2, **characterized in that**
the lens body (14) is configured to include a central lens portion (14a) disposed on the optical axis (AX₁₂) and a peripheral lens portion (14b) disposed in an outer circumference of the central lens portion (14a) so as to surrounded the central lens portion (14a), and
the peripheral lens portion (14b) is configured to include the incident surface (14b1), the light exit surface (14b3), and the reflecting surface (14b2).

4. The lighting unit (10) according to any one of claims 1 to 3, **characterized in that** the horizontally long light-emitting section (12) has an aspect ratio of 1:2 or more.
